# EUROPEAN PATENT APPLICATION

(11) **EP 0 812 595 A1**
(43) Date of publication of application: **17.12.1997**
(21) Application number: 97830277.6
(22) Date of filing: 10.06.1997
(51) Int. Cl.: A61M 1/00, B05B 11/00, G01F 11/02

(54) **Dosing device**

(30) Priority: 11.06.1996 IT FI960140
(71) Applicant: Albiani, Claudio, 52045 Foiano Della Chiana (Arezzo) (IT); Frati, Franco, 52042 Cortona (Arezzo) (IT)
(72) Inventor: Albiani, Claudio, 52045 Foiano Della Chiana (Arezzo) (IT); Frati, Franco, 52042 Cortona (Arezzo) (IT)
(74) Representative: Bardini, Marco Luigi

(57) **Abstract**

A precision dosing device for liquid drugs comprising a cap-structure (3) applied to the drug container (1), a chamber (7) for one single dose of drug, situated inside the cap structure and communicating both with the inside and the outside of the container, a piston device (9, 10) tightly sliding inside chamber (7) and operated from the outside, causing the chamber to empty during the forward stroke and to fill during the reverse stroke. The piston position inside chamber (7) can be adjusted by means of a rotating ring (20) mounted on the cap structure (3) and connected to the piston so that its angular displacement corresponds to a prefixed extent of stroke of the piston and consequently to a different volume available in chamber (7), valve means being provided on conduits for communicating the chamber (7) and the inside and outside of the container.

## Description

The present invention relates to a precision dosing device for dosing liquid drugs. Specifically, this invention concerns a device for dispensing discrete doses of predetermined amounts of pharmaceutical preparations available in liquid form, suitable of being applied to the container of these substances.

It is known that many drugs available in liquid form (e.g. antibiotics and virustatics) must be administered in doses the amounts of which may depend on body weight or on the basis of the concentration of the drug per unit of volume. At present, especially in pediatrics, the packages include special dosing devices, usually consisting of small cups or graduated spoons or other types of measures. Although it is possible to prepare fairly accurate doses with these devices according to the physician's prescriptions or the instructions enclosed in the drug's package, the number of different, possible doses is unfortunately limited.

On the other hand, it is also known that a very accurate dosage of the drug is required, for example, in pediatrics and when administering particular drugs, to prevent any possible contraindications due to overdosage or the ineffectiveness of the treatment due to an insufficient dosage. In these cases, the methods described above prove unsatisfactory and so other methods have been proposed, such as the use of suction devices similar to syringes which ensure the precision required. These devices are, however, not widely spread and quite difficult to use.

The necessity to administer drugs in precise doses and the current lack of suitable means to this end, which are easy to use, causes many problems both to the clinician who has to remember the various doses of each drug and explain them to the person who is to administer them, and to patients and families in general, who find themselves in difficulty when they have to administer doses which are not marked on the measures available, use the measures correctly, or administer the drug during critical hours of the day and especially at night. Even from the viewpoint of the pharmaceutical industry, the lack of suitable dosing devices proves to be a serious drawback, making it more difficult to establish the actual effectiveness of a preparation, as the doses of the drug may be personalised, and to evaluate the incidence of side-effects on the one hand, whereas on the other it hinders the marketing of new formulations or active ingredients.

In other fields, i.e. sanitary products such as liquid soap, dosing devices by suction are already used, which allow the delivery of a certain amount of product usually by gently pressing the dispensing mechanism. These dosing devices, which obviously require only a very approximate precision, consist of a supporting structure serving as a cap which can, for example, be screwed on the bottle's neck and which comprises a chamber connected both to the inside of the bottle and to the outside by means of a dispensing conduit. A non return valve is mounted in the conduit connecting the chamber to the inside of the bottle to keep closed the conduit under normal conditions. A piston sliding in the chamber is integral to a stem extending therefrom to operate the piston. The liquid dispensing conduit normally passes inside the stem and protrudes sideways. To extract a volume of liquid approximately equal to the volume of the chamber from the container it is sufficient to gently depress the top of the protruding stem so that the piston moves inside the chamber forcing the liquid contained in it to flow out through the delivering tube. The elastic return of the piston back to its previous position creates a certain degree of vacuum in the chamber, causing another amount of liquid to rise inside the tube connected to the container. The difference in pressure between the container and the chamber is sufficient to overcome the resistance of the check valve which tends to keep the tube closed.

This type of dosing device is obviously unsuitable for the pharmaceutical industry because it does not guarantee accuracy and does not allow the choice among various possibilities of dosage.

The object of the invention is to provide a precision dosing device for liquid drugs, suitable of being directly applied to the pharmaceutical preparation's container, allowing an accurate measurement of the desired dose easily and rapidly.

This object has been achieved with the precision dosing device according to this invention, the main feature of which consists in that the piston position inside the chamber can be adjusted by turning a ring pivotally supported by the cap structure and connected to the piston so that every angle of its angular displacement corresponds to a predetermined extent of sliding of the piston and consequently to a different volume available in the chamber, valved conduits connecting the chamber to the inside and outside of the container being further provided.

A particular embodiment of the invention includes a slide as an integral part of the piston stem and moving on a helical guide of said ring; a second stem slidably arranged inside the said piston stem, and containing the liquid dispensing conduit. The accesses to the dispensing conduit, at least one of which leads to a liquid recirculation passage, are formed at the end of the second stem, inside the chamber, these accesses being equipped with valve means and selectively made available by rotating said second stem.

The characteristics and the advantages of the precision dosing device according to the invention will be apparent from the following description of embodiments thereof, which is to be intended as an example and not a limitation with reference to the drawings enclosed in which:
- Figure 1 is a side elevational view of a medicine bottle with the dosing device according to the invention mounted on it;
- Figure 2 is a top plan view of the bottle of figure 1.
- Figure 3 is a sectional view of the dosing device according to the invention;
- Figures 4 and 5 are perspective views of details of the dosing device according to the invention;
- Figure 6 is a perspective view of the stem inside the dosing device according to the invention;
- Figure 7 is a schematic sectional, side view of a second embodiment of the precision dosing device according to the invention.

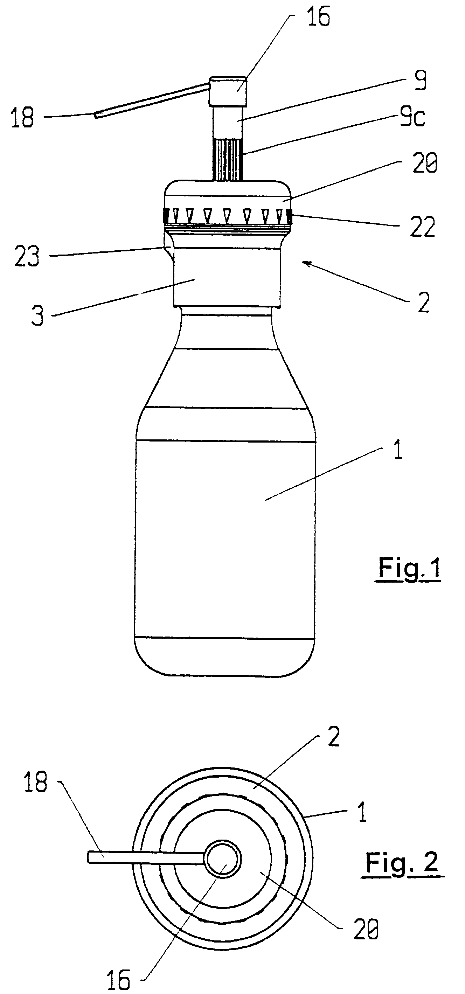

With reference to figures 1 and 2, 1 indicates a bottle for a pharmaceutical preparation in liquid form and 2 a dosing device according to the invention, mounted on the bottle neck, for example screwed on it.

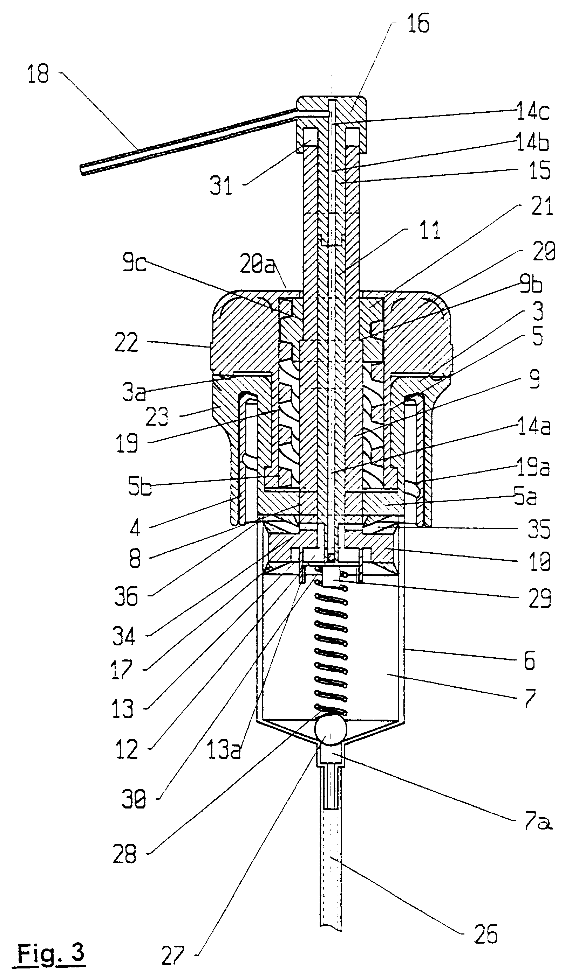

With reference also to figure 3, dosing device 2 comprises a cap structure 3 housing, in a known way, a second safety cap 4 and defining a cylindrical seat 5, the axis of which coincides with the axis of vertical symmetry of bottle 1 once the dosing device is mounted thereon. A cylinder wall 6 with conical bottom extends from bottom wall 5a of cylindrical seat 5, delimiting a chamber 7, the axis of which coincides with the axis of cylindrical seat 5.

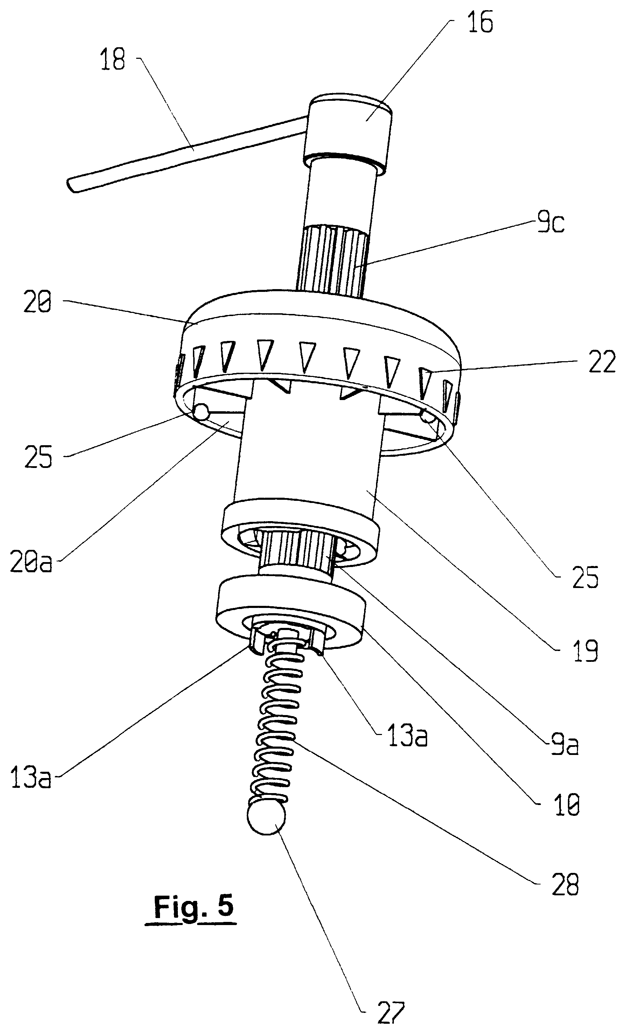

The centre of the bottom wall 5a of the cylindrical seat 5 has a through hole 8, in which a stem 9 of a piston 10 is engaged. Piston 10 is housed in chamber 7 and moves tightly along its walls thanks to gasket 17. The walls of through hole 8 and a portion 9a of the corresponding surface of stem 9 are axially grooved (as shown in figure 5) and mutually engaged to allow the axial sliding movement only and not the mutual rotation. Stem 9 and, correspondingly, piston 10 are axially hollow and contain a second stem 11 which protrudes from piston 10 with a head 12 moving inside an annular wall 13 which has two diametrally facing arched appendages 13a (figure 5) extending from piston 10 towards the bottom of chamber 7. A first portion 14a of a liquid discharge conduit from chamber 7 is formed inside second stem 11. An appendage 15 of cap 16 engages in the end of stem 11 opposite to head 12, a dispensing tube 18 projecting laterally from cap 16. Appendage 15 extends inside stem 9 and contains a second portion 14b of the liquid discharge conduit from chamber 7, axially aligned with first portion 14a, while a third portion 14c of said conduit is formed inside cap 16 and has an angled shape to connect the second portion 14b with the sideways extended dispensing tube 18.

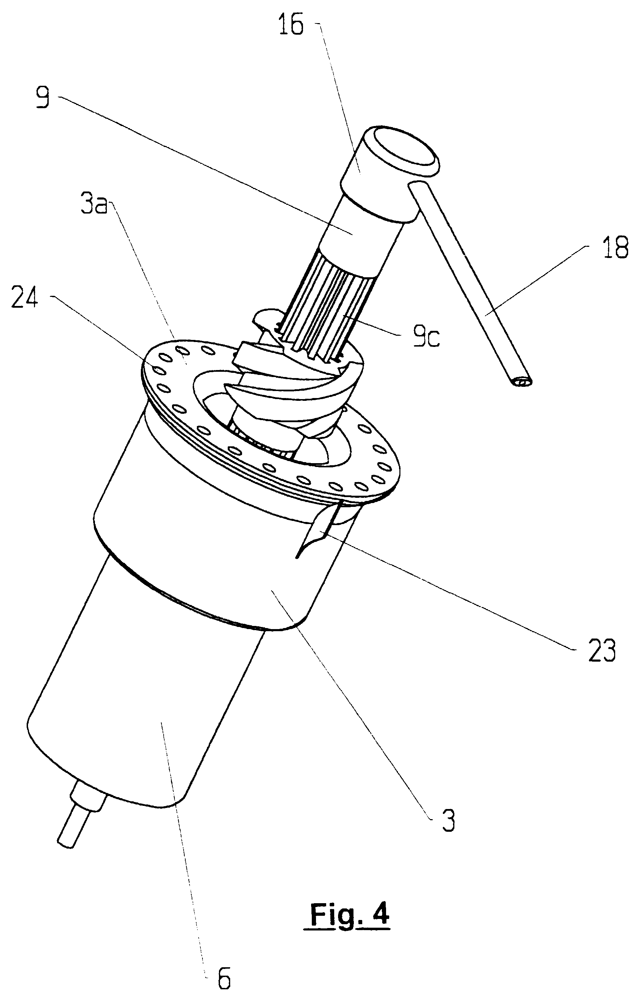

With further reference to figures 3 and 5, a control ring 20 is pivotally secured to cap structure 3 and a sleeve 19 extends therefrom in a coaxial relation to stems 9 and 11. Sleeve 19 has an annular lip 19a projecting outwardly and engaging with a corresponding perimetrical groove 5b formed on cylindrical seat 5 near bottom wall 5a. The internal wall of sleeve 19 is threaded and engages with a slide 21 coaxial to stems 9 and 11 and abutting against bottom wall 20a of ring 20, at one end of its stroke, and with a jut 9b formed on the outer surface of stem 9, at the other end. The inner surface of slide 21 and the corresponding surface portion 9c of stem 9 are grooved axially to allow their mutual sliding but not rotation (see figures 4 and 5).

On the lateral outer surface of ring 20 a row of notches 22 is formed, each corresponding to a dose, e.g. referred to body weight, while a reference index 23 is marked on the outer surface of cap structure 3. Ring 20 can be rotated with respect to cap structure 3 so that the selected notch 22 can be positioned to coincide with reference index 23. As shown in figures 4 and 5, in order to prevent ring 20 from moving with respect to cap structure 3 in whatever position selected, on surface 3a facing ring 20 there are formed as many spherical seats 24 arranged along a circumferential path as there are notches 22, whereas two diametrically opposing balls 25 project from side 20a of ring 20 towards surface 3a and snap into engagement with corresponding seats 24, thus blocking the ring in any position corresponding to a specific dose.

By rotating ring 20 to select a specific dose, slide 21 is caused to move inside threaded sleeve 19. Stem 9 moves correspondingly together with slide 21 and positions piston 10 inside chamber 7 at a certain level from to the bottom, thus defining the proper volume corresponding to the selected dose.

Chamber 7 is put into communication with the inside of the container through an opening 7a formed on its bottom wall, from which as in known dosing devices, a small tube 26 extends up to the bottom of the container. Opening 7a is normally kept closed from the inside of chamber 7 by valve means consisting of a ball 27 which closes opening 7a, and an elastic member 28, in particular a spiral compression spring fixed to ball 27, extending up to head 12 of stem 11 and coaxially wound to a pivot 29 projecting from head 12.

Portion 14a of the discharge conduit is put into communication with the inside of chamber 7 by means of two lateral passages 30 formed in head 12 of stem 11 and diametrically aligned. In normal conditions, passages 30 are closed by annular wall 13 extending from piston 10. They become accessible when second stem 11 is slid with respect to first stem 9. To this purpose, an annular seat 31 is formed in cap 16 coaxially to the axis of stem 9, in which the top end of stem 9 engages for a length smaller than its depth. When pushing on cap 16, the connected stem 11 can slide until the top end of stem 9 abuts against the bottom of annular seat 31 and passages 30 become accessible. By pushing cap 16 again, piston 10 is obviously caused to slide against spring 28.

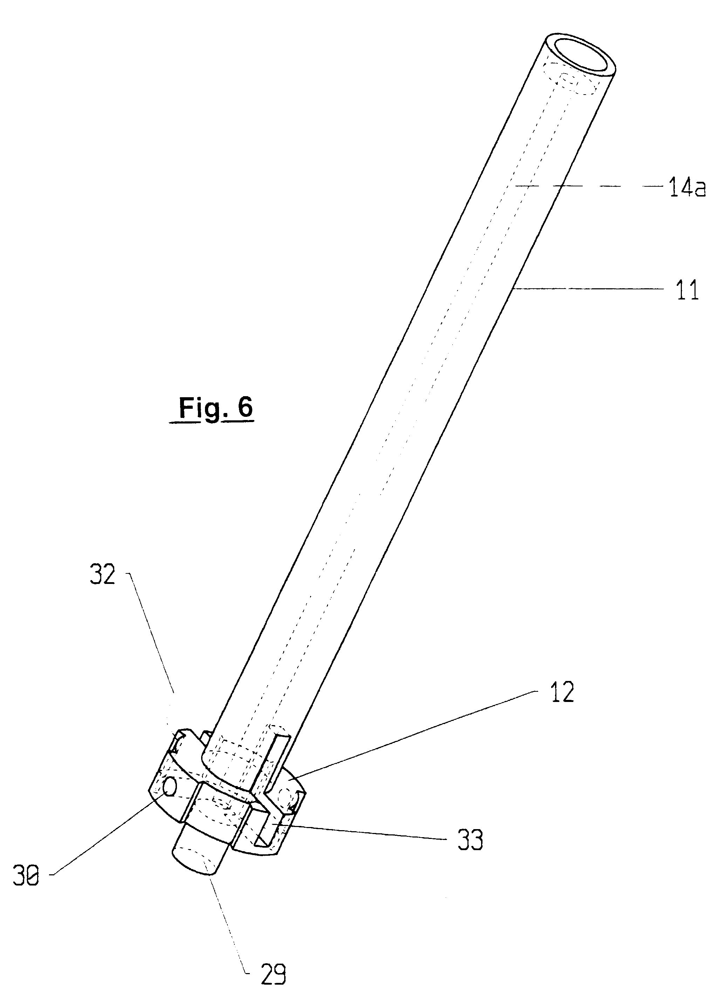

As shown in figures 3 and 6, head 12 cannot rotate with respect to annular wall 13 when engaged in it. Indeed, as shown in figure 6, four angularly spaced recesses 32 are formed into the lateral surface of head 12, in which corresponding teeth engage (not shown) projecting inwardly from the annular wall 13. In addition, at least one other passage 33 extends radially with a right angle from the lateral surface of head 12, which follows stem 11 for a short length until it reaches the same level of at least two radial passages 34 formed on stem 9. This arrangement has the purpose of putting into communication chamber 7 to a space 35 between piston 10 and bottom wall 5a of cylindrical seat 5. This allows any excess liquid in chamber 7 to be recirculated in the bottle, making it pass through the angled passage 33, passages 34 and an opening 36 formed in wall 6 of chamber 7 below bottom wall 5a. Under normal conditions, neither passages 30 nor angled passages 33 are accessible as they are closed by the annular wall 13. As stated above, it is possible to open holes 30 by depressing cap 16, so that head 12 slides along wall portions 13a which, however, continue to close the inlets of the angled passages 33. To give access to the angled passages 33 as an alternative to passages 30, cap 16 must be pressed to slide stem 11 so that head 12 is disengaged from annular wall 13. At this point, stem 11 is rotated by 90°, moving passages 30 in line with arched portion 13a, thus freeing the inlets of angled passages 33. The possibility of allowing the excess liquid to return to the bottle is advantageous as it guarantees that the volume, determined by the position of piston 10 inside chamber 7, is actually full of liquid and consequently the dose is correctly measured. By repeating the above operations in reverse order, it is possible to restore the dispensing condition. It should also be noted that, when passages 30 are in line with arched portions 13a, any possibility of dispensing the drug, and consequently any risk of an uncontrolled use of the dosing device, is prevented.

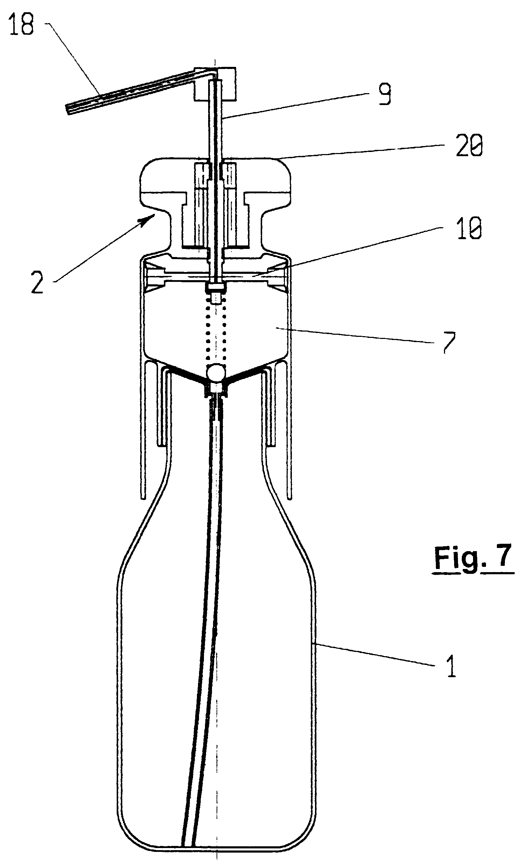

An alternative embodiment of the dosing device according to the invention, which is particularly useful for extracting large doses of a product, includes the possibility of mounting chamber 7 to the outside of the bottle's neck. This embodiment is shown in figure 7 and is not described in detail as its structure and function is similar to that described above.

Variations and/or modifications can be brought to the dosing device according to the invention without departing from the scope of the invention as defined in the appended claims.

## Claims

1. A precision dosing device for liquid drugs comprising:
- a cap structure (3) to be mounted on a drug container (1);
- a chamber (7) for one single dose of drug formed in said cap structure (3), which can be put into communication both with the inside and outside of said container (1);
- piston means (10) tightly sliding in said chamber (7) suitable of being operated from the outside for emptying during the forward stroke and for filling during the reverse stroke, the position of said piston means in said chamber (7) being adjustable by means of a rotating ring (20) pivotally mounted on said cap structure (3) and connected to piston means (10) so that every angular displacement of a certain extent corresponds to a predetermined translation of said piston means (10) and consequently to a different volume available in said chamber (7), communication conduits (14,26) with valve means being provided between said chamber (7) and the inside and outside of said container (1).

2. The dosing device according to claim 1, in which said piston means (10) include a tubular piston stem (9) sliding, but not rotating, within said cap structure (3) and slidably connected to said ring (20) by helical guide means (19), said stem (9) housing means for putting into communication said chamber (7) to the outside of said container (1).

3. The dosing device according to claim 2, wherein said helical guide means comprise a tubular seat (19) having a threaded inner surface and formed in said ring (20), and a slide (21) engaging in said threaded surface and integral with said stem (9).

4. The dosing device according to claim 2, wherein the means for putting into communication chamber (7) to the outside of said container (1), comprise a second stem (11), coaxial to said piston stem (9), in which a liquid discharge conduit (14a, b, c) is formed, said second stem (11) protruding from said chamber (7) through said piston and being slidably engaged in an annular wall (13), extending from said piston for closing an inlet (30) of said conduit (14a).

5. The dosing device according to claim 4, wherein said second stem (11) slides along said piston stem (9) for a length sufficient to disengage said inlet (30) of said conduit (14a) from said annular wall (12), being thus sliding integrally to said piston stem (9) with respect to said cap structure (3).

6. The dosing device according to claim 5, in which a passage (33), angularly spaced from said inlet (30) of said conduit (14a), is formed in said second stem (11) for recirculating the excess liquid drawn up into said chamber (7), said passage (33) connecting said chamber (7) to the inside of said container (1) through other passages (34, 36) formed in said piston stem (9) and on the wall of said chamber (7), said recirculation passage (33) being closed by said annular wall (13) and by corresponding appendages (13a) thereof projecting into said chamber (7), axial sliding guides (32) being provided between said annular wall (13) and said second stem (11), which can be disengaged to allow the rotation of said second stem (11) against said piston stem (9) and the alignment of said discharge conduit inlet (30) with said appendages (13a) of said annular wall (13), thus opening said recirculation passage (33).

7. The dosing device according to claim 1, wherein a valve member (27) is mounted between said chamber (7) and the inside of said container (7), said valve member being normally closed by elastic means (28) inserted between said valve member and said piston means.

8. The dosing device according to claim 1, wherein a plurality of notches (22) is formed on said ring (20) corresponding to the same number of doses which can be selected, while a reference index (23) is provided on said cap structure (3) to be aligned with the notch corresponding to the selected dose, means (25) for blocking said ring (20) in the position corresponding to the selected dose, being further provided.

9. The dosing device according to claim 1, wherein said chamber (7) is housed in the neck of said container (1).

10. The dosing device according to claim 1, wherein said chamber (7) is mounted externally to said container (1).
